# EUROPEAN PATENT APPLICATION

(11) **EP 3 468 156 A1**
(43) Date of publication of application: **10.04.2019**
(21) Application number: 18198148.1
(22) Date of filing: 02.10.2018
(51) Int. Cl.: H04L 29/12, H04W 76/12

(54) **SYSTEMS AND METHODS FOR CREATING A VIRTUAL LAYER 2 NETWORK THROUGH TETHERING**

(30) Priority: 04.10.2017 US 201715724786
(71) Applicant: Harris Solutions NY, Inc., Rochester 14623 (US)
(72) Inventor: Ransom, Nathan, Rochester, NY 14624 (US); McCusker, James, Bloomfield, NY 14469 (US)
(74) Representative: Schmidt, Steffen J.

(57) **Abstract**

Systems (100) and methods (600) for enabling communications between a Private Network Resource ("PNR") and a first Radio Network Resource ("RNR"). The methods comprise: performing first operations by the PNR to generate a first packet with a header including a first Private Address ("PA") for the PNR and a first Effective PA ("EPA") for the first RNR; communicating the first packet from the PNR to a second RNR via first private network; performing second operations at the second RNR to parse the first PA and the first RNR from the first packet's header, and translate the first PA into a first Radio Address ("RA") and the first EPA into a second RA; generating a second packet by modifying the first packet's header to include the first and second RAs; and communicating the second packet to the first RNR via radio network.

## Description

### FIELD

This document relates generally to communication systems. More particularly, this document relates to systems and methods for creating a virtual layer 2 network through tethering.

### BACKGROUND

Currently, connections between End User Devices ("EUDs") and radios (or other devices) are severely limited. A small subset of devices allow for networkable connections to be added without changing EUD firmware. This approach is becoming impractical both due to the number of desired devices, speed at which devices change, and requirements that devices are not changed/rooted due to security concerns and certifications.

There are a few solutions to solving this problem. These solutions include: using Communications Device Class ("CDC") Ethernet (a subset of devices include support for this method); modifying the software to add the required drivers and stacks; and Universal Serial Bus ("USB") tethering is available from the device. The USB tethering only shared the device's connection with an attached device, not the other way around.

### SUMMARY

The present disclosure concerns implementing systems and methods for enabling communications between a Private Network Resource ("PNR") and a first Radio Network Resource ("RNR"). The methods comprise: performing first operations by the PNR to generate a first packet with a header including a first Private Address ("PA") for the PNR and a first Effective PA ("EPA") for the first RNR; communicating the first packet from the PNR to a second RNR via first private network; performing second operations at the second RNR to parse the first PA and the first RNR from the first packet's header, and translate the first PA into a first Radio Address ("RA") and the first EPA into a second RA; generating a second packet by modifying the first packet's header to include the first and second RAs; and communicating the second packet to the first RNR via radio network.

In some scenarios, the second packet is communicated over the radio network from the second RNR to a third RNR. A second header can optionally be added to the second packet including a third RA for the second RNR and a fourth RA for the third RNR. The third RNR performs operations to: optionally remove the second header from the second packet; parse the first and second RAs from the second packet; translate the first and second RAs respectively into a second EPA for the PNR and a second PA for the first RNR; generate a third packet by modifying the second packet to include the second EPA for the PNR and the second PA for the first RNR; and communicate the third packet from the third RNR to the first RNR. The third packet may be communicated from the third RNR over a second private network.

### DETAILED DESCRIPTION OF THE DRAWINGS

The present solution will be described with reference to the following drawing figures, in which like numerals represent like items throughout the figures.
FIG. 1 is an illustration of an illustrative system implementing the present solution.
FIG. 2 is a block diagram of an illustrative architecture for a radio.
FIG. 3 is an illustration of an illustrative EUD table.
FIG. 4 is an illustration of an illustrative Look-Up Table ("LUT").
FIG. 5 is a flow diagram of an illustrative method for building an LUT, such as that shown in FIG. 4.
FIGS. 6A-6B (collectively referred to herein as "FIG. 6") provide a flow diagram of an illustrative method for enabling communications between a private network resource and a radio network resource.
FIG. 7 is an illustration of an illustrative messaging process between two EUDs communicatively coupled to each other via at least a radio network.

### DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout the specification may, but do not necessarily, refer to the same embodiment.

Furthermore, the described features, advantages and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

As used in this document, the singular form "a", "an", and "the" include plural references unless the context clearly dictates otherwise. Unless defined otherwise, all technical and scientific terms used herein have the same meanings as commonly understood by one of ordinary skill in the art. As used in this document, the term "comprising" means "including, but not limited to".

The present disclosure concerns implementing systems and methods for the creation of a virtual network between devices through a layered approach. In the implementing systems, EUDs remain unchanged and still have full IP connectivity across a local link. At the same time, the EUDs do not require any special driver support.

The main problem with the use of USB tethering is that the phone wants to be in charge of the network. The present solution through a translation layer allows the presentation of a network of virtual devices that are fronted by a single real device with connectivity to the rest. The novel aspects of the present solution include: the ability to do this without changing or configuring the EUD; the ability to maintain device control of a private network; and the ability to allow for EUDs within the private network to have full network connectivity.

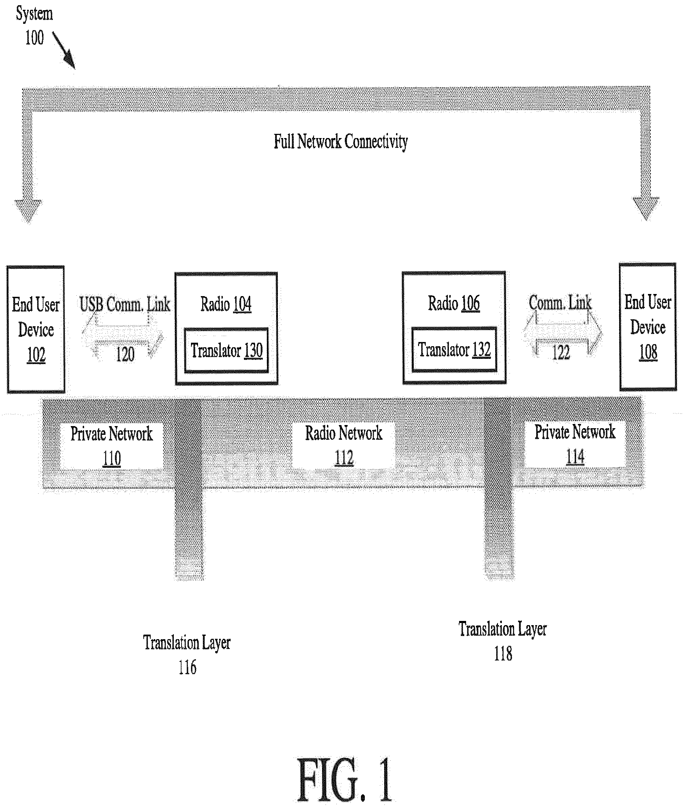

Referring now to FIG. 1, there is provided an illustration of an illustrative system **100** implementing the present solution. System **100** comprises EUDs **102, 108** and radios **104, 106.** The EUDs are respectively communicatively coupled to the radios via Universal Serial Bus ("USB") communication links **120, 122.** USB communication links are well known in the art, and therefore will not be described herein.

Each radio **104, 106** comprises a translator **130, 132** to facilitate the provision of translation layers **116, 118** between a private network **110, 114** and a radio network **112.** Each translator **130, 132** is generally configured to translate or convert radio network addresses to private network addresses, and vice versa. This translation allows EUDs to be addressable to other radio network devices, as well as allows the radio network devices to be presented to the EUDs as devices on the private network **110, 114**. In this regard, the EUDs send and receive messages having private network source addresses and private network destination addresses even when communicating with a radio network resource. Accordingly, the EUDs' firmware is not modified for purposes of implementing the present solution. The particulars of the translation will be described in detail below.

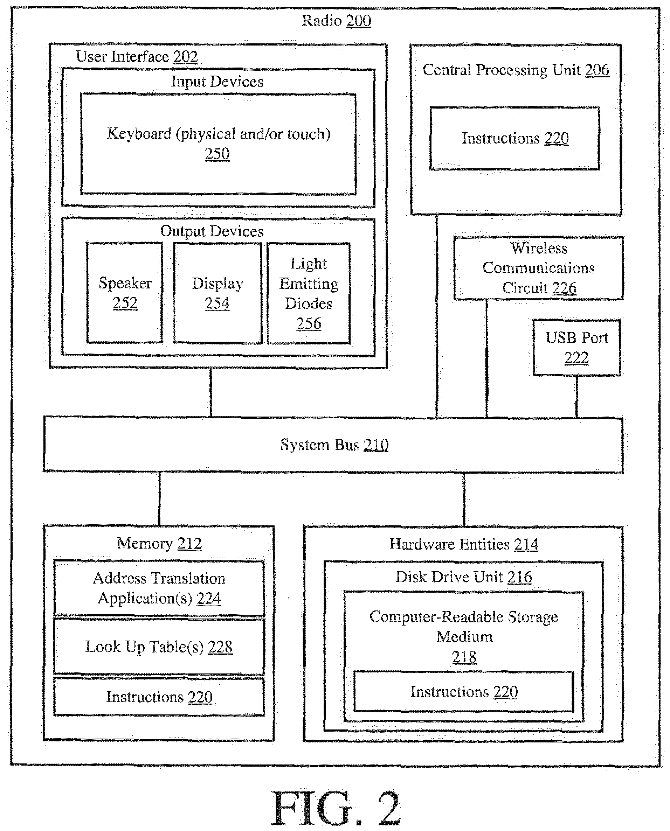

Referring now to FIG. 2, there is provided an illustration of an exemplary architecture for a radio **200**. Radios **104, 106** of FIG. 1 are the same as or similar to radio **200**. As such, the discussion of radio **200** is sufficient for understanding these components of radios **104, 106.**

Radio **200** may include more or less components than those shown in FIG. 2. However, the components shown are sufficient to disclose an illustrative solution implementing the present solution. The hardware architecture of FIG. 2 represents one implementation of a representative radio configured to enable the creation of a virtual layer 2 network through tethering as described herein. As such, the radio **200** of FIG. 2 implements at least a portion of the method(s) described herein.

Some or all the components of the radio **200** can be implemented as hardware, software and/or a combination of hardware and software. The hardware includes, but is not limited to, one or more electronic circuits. The electronic circuits can include, but are not limited to, passive components (e.g., resistors and capacitors) and/or active components (e.g., amplifiers and/or microprocessors). The passive and/or active components can be adapted to, arranged to and/or programmed to perform one or more of the methodologies, procedures, or functions described herein.

As shown in FIG. 2, the radio **200** comprises a user interface **202,** a Central Processing Unit ("CPU") **206,** a system bus **210,** a memory **212** connected to and accessible by other portions of radio **200** through system bus **210,** and hardware entities **214** connected to system bus **210.** The user interface can include input devices and output devices, which facilitate user-software interactions for controlling operations of the radio **200.** The input devices include, but are not limited, a physical and/or touch keyboard **250**. The input devices can be connected to the radio **200** via a wired or wireless connection (e.g., a Bluetooth® connection). The output devices include, but are not limited to, a speaker **252,** a display **254,** and/or light emitting diodes **256.**

At least some of the hardware entities **214** perform actions involving access to and use of memory **212,** which can be a Radom Access Memory ("RAM"), a disk driver and/or a Compact Disc Read Only Memory ("CD-ROM"). Hardware entities **214** can include a disk drive unit **216** comprising a computer-readable storage medium **218** on which is stored one or more sets of instructions **220** (e.g., software code) configured to implement one or more of the methodologies, procedures, or functions described herein. The instructions **220** can also reside, completely or at least partially, within the memory **212** and/or within the CPU **206** during execution thereof by the radio **200.** The memory **212** and the CPU **206** also can constitute machine-readable media. The term "machine-readable media", as used here, refers to a single medium or multiple media (e.g., a centralized or distributed database, and/or associated caches and servers) that store the one or more sets of instructions **220**. The term "machine-readable media", as used here, also refers to any medium that is capable of storing, encoding or carrying a set of instructions **220** for execution by the radio **200** and that cause the radio **200** to perform any one or more of the methodologies of the present disclosure.

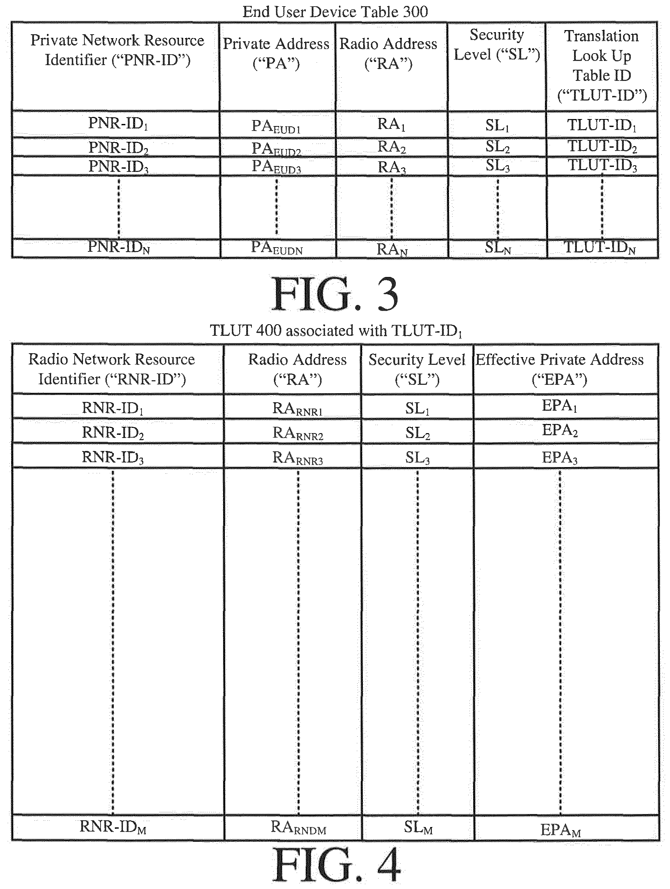

In some scenarios, the hardware entities **214** include an electronic circuit (e.g., a processor) programmed for facilitating the creation of a virtual layer 2 network through tethering. In this regard, it should be understood that the electronic circuit can access and run address translation application(s) **224** installed on the radio **200.** The functions of the software application(s) **224** are apparent from the above discussion of the present solution. For example, the software application is configured to perform one or more of the operations described above in relation to FIG. 1 and below in relation to FIGS. 3-7. Such operations include using prestored Look Up Tables ("LUTs") and/or dynamically created and maintained LUTs to facilitate address translation.

Illustrative LUTs are provided in FIGS. 3-4. These LUTs can be at least partially prestored and/or at least partially dynamically created. As shown in FIG. 3, a first LUT comprises an EUD table **300.** EUD table **300** has a plurality of columns and a plurality of rows. Each row includes the following information for a respective EUD (e.g., EUD **102** of FIG. 1) communicatively coupled to a radio (e.g., radio **104** of FIG. 1): a Private Network Resource Identifier ("PNR-ID"); a Private Address ("PA"); a Radio Address ("RA"); a Security Level ("SL"); and a Translation LUT Identifier ("TLUT-ID"). For example, a first row of the EUD table **300** includes the following information for a first EUD: **PNR-ID₁; PNA_{EUD1}; RA₁**; **SL₁**; and **TLUT-ID**₁. A second row of the EUD table 300 includes the following information for a second EUD: **PNR-ID₂**; **PNA_{EUD2}**; **RA₂**; **SL₂**; **TLUT-ID₂**, and so on. Each EUD has a unique TLUT generated therefore.

An illustrative embodiment of the TLUT referenced in FIG. 3 with a **TLUT-ID₁** is shown in FIG. 4. The TLUTs referenced in FIG. 3 with identifiers **TLUT-ID₂**,..., **TLUT-ID_{N}** are substantially similar to the TLUT with identifier **TLUT-ID₁.** Therefore, the following discussion of FIG. 4 is sufficient for understanding the TLUTs with identifiers **TLUT-ID₂**,..., **TLUT-ID_{N}.**

As shown in FIG. 4, the EUD table **300** has a plurality of columns and a plurality of rows. Each row includes the following information for a respective Radio Network Resource ("RNR") (e.g., radio **104** of FIG. 1, radio **106** of FIG. 1 or EUD **108** of FIG. 1): an RNR Identifier ("RNR-ID"); a Radio Address ("RA"); a Security Level ("SL"); and an Effective PA ("EPA"). For example, a first row includes the following information for a first RNR: **RNR-ID₁**; **RA_{RNR1}; SL₁;** and **EPA₁.** A second row includes the following information for a second RNR: **RNR-ID₂; RA_{RNR2}; SL₂;** and **EPA₂**, and so on.

As noted above, each EUD has a unique TLUT generated therefore. Accordingly, the same RNR can have two different EPAs associated therewith. A first EPA for use by a first EUD, and a second different EPA for use by a second EUD. This is an important feature of the present solution since it at least partially allows the EUDs to remain unchanged and still have full Internet Protocol ("IP") connectivity across a local link. Also, this feature of the present solution eliminates the need for special driver support on the EUDs.

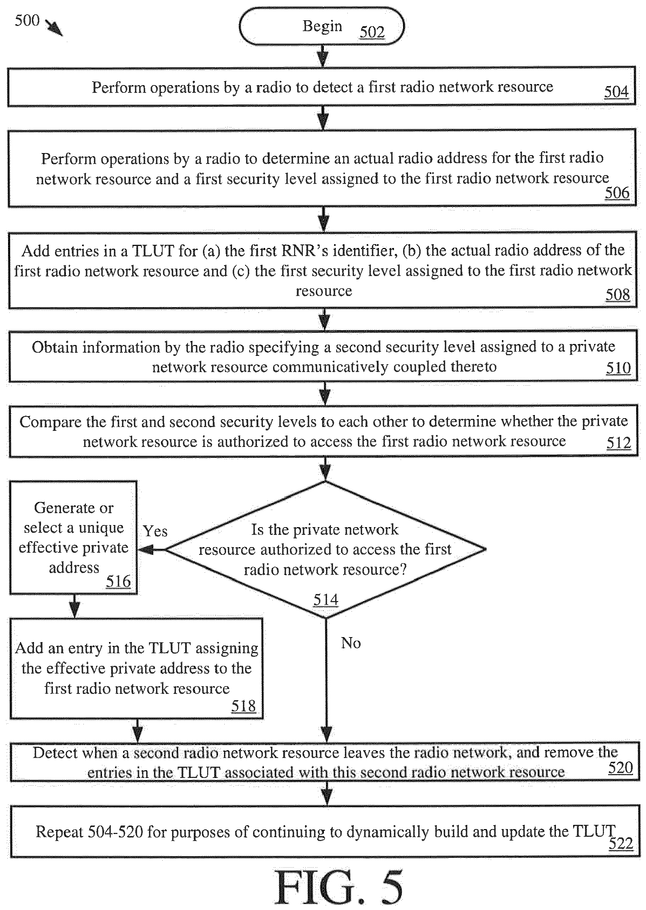

Referring now to FIG. 5, there is provided a flow diagram of an illustrative method **500** for dynamically building a **TLUT.** Notably, the TLUTs can be pre-configured prior to operation of system **100,** and remain static throughout operation of system **100** (unless manually updated by an administrator or other individual). However, in other scenarios, the TLUTs are dynamically built and updated by the RNR (e.g., radio **104** or **106** of FIG. 1). An illustrative dynamic process for building and updating a TLUT will now be described.

As shown in FIG. 5, method **500** begins with **502** and continues with **504** where a radio (e.g., radio **104** of FIG. 1) detects a first RNR (e.g., radio **106** or EUD **108** of FIG. 1). In response to this detection, 506 is performed where the radio determines an actual RA for the first RNR and a first SL of the first RNR. Entries are then added in **508** to a TLUT (e.g., TLUT with a **TLUT-ID₁** of FIG. 4) for (a) the first RNR's identifier (e.g., **RNR-ID₁** of FIG. 4), (b) the actual RA for the first RNR (e.g., **RA_{RNR1}** of FIG. 4) and (c) the first SL assigned to the first RNR (e.g, **SL₁** of FIG. 4).

Thereafter in **510,** the radio obtains information specifying a second SL assigned to a PNR (e.g., EUD **102** of FIG. 1) communicatively coupled thereto. The first and second SLs are compared to each other to determine whether the PNR is authorized to access the first RNR. If not **[514:NO],** then method **500** continues with **520** which will be discussed below. If so **[514:YES],** then a unique EPA is selected or generated as shown by **516.** In some scenarios, the unique EPA is generated in accordance with a random or pseudo-random algorithm. The unique EPA can additionally or alternatively be selected from a list of pre-defined EPAs. For example, an EPA is randomly selected from a pre-defined list of EPAs. The present solution is not limited to the particulars of this example. Next in **518,** an entry is added to the TLUT assigning the selected or generated EPA to the first RNR (e.g., **EPA₁** of FIG. 4).

Subsequently, the radio detects when a second RNR leaves the radio network, as shown by **520**. In response to this detection, the radio removes the entries in the TLUT associated with the second RNR. The above described process of **504-520** is repeated for purposes of continuing to dynamically build and update the TLUT, as shown by **522.**

The present solution is not limited to the order in which the operations **504-522** are performed. For example, in some scenarios, the operations of **520** are performed at any point during operations **504-518.** Thus, the operations of **520** can be performed in parallel with the operations of **504-518.**

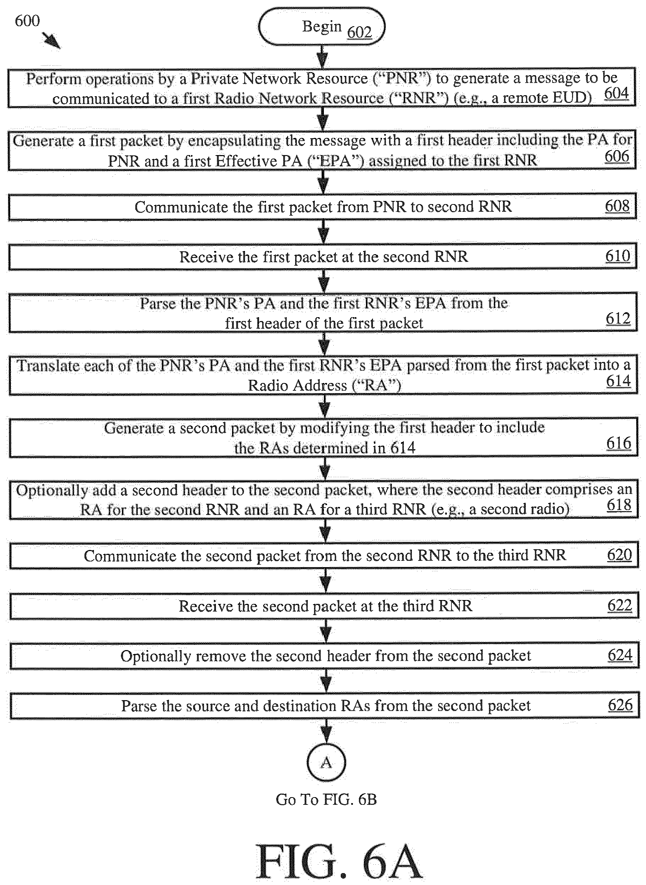

Referring now to FIG. 6A, there is provided a flow diagram of an illustrative method **600** for enabling communications between a PNR (e.g., EUD **102** of FIG. 1) and an RNR (e.g., EUD **108** of FIG. 1). Method **600** begins with **602** and continues with **604** where the PNR generates a message to be communicated to a first RNR (e.g., EUD **108** of FIG. 1). A first packet is then generated in **606** by encapsulating the message. The message is encapsulated with a first header including a PA for the PNR and a first EPA assigned to the first RNR. The first packet is communicated from the PNR to the second RNR, as shown by **608.** In **610,** the first packet is received at the second RNR.

At the second RNR, the PNR's PA and the first RNR's EPA are parsed from the first header of the first packet in **612.** Each of the PNR's PA and the first RNR's EPA are translated into an RA during **614.** This translation is achieved using an EDU table (e.g., EDU table 300 of FIG. 3) and a corresponding TLUT (e.g., TLUT **400** of FIG. 4). Next in **616,** a second packet is generated by modifying the first header to include the RAs determined in **614.** A second header is optionally added to the second packet as shown by **618.** The second header comprises an RA for the second RNR and an RA for the third RNR (e.g., radio **106** of FIG. 1). The second packet is sent in **620** from the second RNR (e.g., radio **104** of FIG. 1) to the third RNR (e.g., radio **106** of FIG. 1). In **622,** the second packet is received at the third RNR.

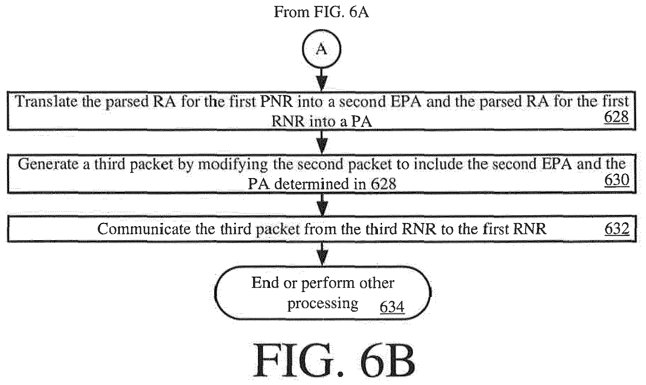

At the third RNR, the second header is optionally removed from the second packet during **624.** The source and destination RAs are parsed from the second packet in 626. Thereafter, the parsed RAs are translated in **628** of FIG. 6B. More specifically, the parsed RA for the first PNR is translated into a second EPA, and the parsed RA for the first RNR is translated into a PA. A third packet is generated in **630** by modifying the second packet to include the second EPA and the PA determined in **628**. The third packet is communicated from the third RNR to the first RNR, as shown by **632.** Subsequently, **634** is performed where method **600** ends or other processing is performed.

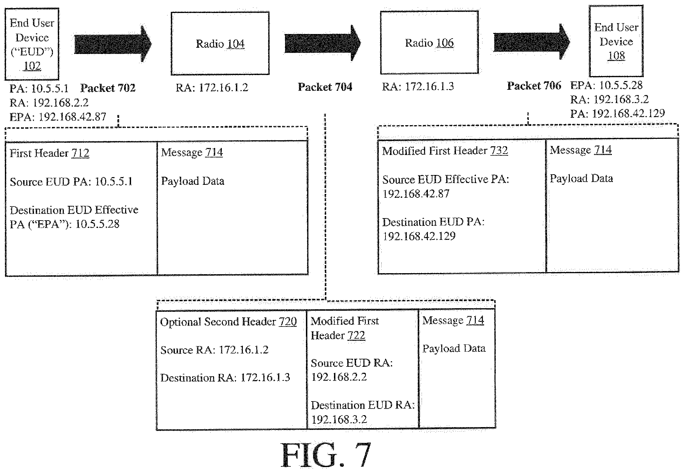

Referring now to FIG. 7, there is provided an illustration that is useful for understanding how implementing system **100** of FIG. 1 could operate when preforming method **600.** As shown in FIG. 7, end user device **102** generates a first packet **702** and communicates the same to radio **104.** The first packet **702** is processed at the radio **104** to translate addresses therein. A second packet **704** is then generated using the translated addresses and communicated from radio **104** to radio **106.** The second packet **704** is processed at radio **106** to once again translate addresses therein. The translated addresses are then used to generate a third packet **706.** The third packet **706** is sent to EUD **108.**

As shown in FIG. 7, the first packet **702** comprises a first header **712** and a message **714** with payload data. The first header **712** includes a source EUD PA **10.5.5.1** and a destination EUD EPA **10.5.5.28.** The source EUD PA **10.5.5.1** and a destination EUD EPA **10.5.5.28** are translated at the radio **104** into a source EUD RA **192.168.2.2** and a destination EUD RA **192.168.3.2,** respectively.

The second packet **704** is then generated by modifying the first header to include the source EUD RA **192.168.2.2** and the destination EUD RA **192.168.3.2.** An optional second header **720** is added to the second packet **704.** The second header **720** includes a source RA **172.16.1.2** for radio **104** and a destination RA **172.16.1.3** for radio **106.** The second packet is then sent from radio **104** to radio **106.**

At radio **106,** the optional second header **720** is removed from the second packet. Additionally, the source EUD RA **192.168.2.2** and the destination EUD RA **192.168.3.2** are parsed from the modified first header **722.** The source EUD RA **192.168.2.2** and the destination EUD RA **192.168.3.2** are translated into a source EUD EPA **192.168.42.87** and a destination EU PA **192.168.42.129.** The third packet **706** is then generated by modifying header **722** to include the source EUD EPA **192.168.42.87** and the destination EU PA **192.168.42.129.**

All of the apparatus, methods, and algorithms disclosed and claimed herein can be made and executed without undue experimentation in light of the present disclosure. While the invention has been described in terms of preferred embodiments, it will be apparent to those having ordinary skill in the art that variations may be applied to the apparatus, methods and sequence of steps of the method without departing from the concept, spirit and scope of the invention. More specifically, it will be apparent that certain components may be added to, combined with, or substituted for the components described herein while the same or similar results would be achieved. All such similar substitutes and modifications apparent to those having ordinary skill in the art are deemed to be within the spirit, scope and concept of the invention as defined.

The features and functions disclosed above, as well as alternatives, may be combined into many other different systems or applications. Various presently unforeseen or unanticipated alternatives, modifications, variations or improvements may be made by those skilled in the art, each of which is also intended to be encompassed by the disclosed embodiments.

## Claims

1. A method for enabling communications between a Private Network Resource ("PNR") and a first Radio Network Resource ("RNR"), comprising:
performing first operations by the PNR to generate a first packet with a header including a first Private Address ("PA") for the PNR and a first Effective PA ("EPA") for the first RNR;
communicating the first packet from the PNR to a second RNR via first private network;
performing second operations at the second RNR to
parse the first PA and the first RNR from the first packet's header, and
translate the first PA into a first Radio Address ("RA") and the first EPA into a second RA;
generating a second packet by modifying the first packet's header to include the first and second RAs; and
communicating the second packet to the first RNR via radio network.

2. A system, comprising:
a processor; and
a non-transitory computer-readable storage medium comprising programming instructions that are configured to cause the processor to implement a method for facilitating communications between a source Private Network Resource ("PNR") and a destination Radio Network Resource ("RNR"), wherein the programming instructions comprise instructions to:
receive, by a first intermediary RNR, a first packet with a header including a first Private Address ("PA") for the source PNR and a first Effective PA ("EPA") for the destination RNR;
parse the first PA and the first RNR from the first packet's header;
translate the first PA into a first Radio Address ("RA") and the first EPA into a second RA;
generate a second packet by modifying the first packet's header to include the first and second RAs; and
communicate the second packet from the first intermediary RNR over a radio network

3. The system according to claim 2, wherein the second packet is communicated over the radio network from the first intermediary RNR to a second intermediary RNR.

4. The system according to claim 3, wherein the second intermediary RNR parses the first and second RAs from the second packet, and translates the first RA into a second EPA for the source PNR and the second RA into a second PA for the destination RNR.

5. The system according to claim 4, wherein the second intermediary RNR generates a third packet by modifying the second packet to include the second EPA for the source PNR and the second PA for the destination RNR.

6. The system according to claim 5, wherein the third packet is communicated from the second intermediary RNR to the destination RNR.

7. The system according to claim 6, wherein the third packet is communicated from the second intermediary RNR over a private network.

8. The system according to claim 3, wherein the programming instructions further comprise instructions to add a second header to the second packet including a third RA for the second RNR and a fourth RA for the third RNR.

9. The system according to claim 8, wherein the second header is removed from the second packet at the third RNR.
